Europäisches Patentamt

European Patent Office

Office européen des brevets

(19)

(11) Publication number: **0 138 315**
**B1**

(12) **EUROPEAN PATENT SPECIFICATION**

(45) Date of publication of patent specification: **19.10.88**

(51) Int. Cl.⁴: **F 02 M 15/04, F 02 M 31/12**

(21) Application number: **84305331.5**

(22) Date of filing: **06.08.84**

(54) Gasket heater and fuel supply using such a heater.

(30) Priority: **26.08.83 US 526717**
**26.08.83 US 526769**

(43) Date of publication of application:
**24.04.85 Bulletin 85/17**

(45) Publication of the grant of the patent:
**19.10.88 Bulletin 88/42**

(84) Designated Contracting States:
**DE FR GB IT NL SE**

(56) References cited:
**US-A-4 377 148**
**US-A-4 389 354**
**US-A-4 406 785**

**PATENT ABSTRACTS OF JAPAN vol. 5, no. 189,
28th November 1981, page (M-99) (861)**

**PATENT ABSTRACTS OF JAPAN vol. 6, no. 146,
5th August 1982, page (M-147) (1024)**

(73) Proprietor: **TEXAS INSTRUMENTS
INCORPORATED
13500 North Central Expressway
Dallas Texas 75265 (US)**

(72) Inventor: **Strobel, Stephen J.
230 Gover Street
PNDS 16 North Adelaide (AU)**
Inventor: **Berg, Peter G.
260 Towne Street
Attleboro Falls Massachusetts 02703 (US)**

(74) Representative: **Abbott, David John et al
Abel & Imray Northumberland House 303-306
High Holborn
London, WC1V 7LH (GB)**

Courier Press, Leamington Spa, England.

## Description

The field of this invention is that of fuel systems for furnishing an air-fuel mixture to an internal combustion engine, and the invention relates more particularly to means for preventing freeze-up of a fuel supply or inlet means such as, idle screw or nozzle means or the like in a throttle body used in such a system during operation of the system.

In throttle body automotive fuel systems wherein idling speed fuel supply or fuel inlet nozzle means or the like are arranged in a throttle body for furnishing a selected fine stream of fuel into a throttle body for evaporating the fuel to form an air-fuel mixture to be furnished to an engine during idling operation of the engine, the cooling effect of expansion or evaporation of air and/or air-fuel mixtures in the throttle body means has a tendency to cause at least temporary freezeup of such idle speed fuel inlet nozzle means with resulting failure of engine firing or loss of suitable engine driveability. Similar problems can also occur with freeze-up of air inlet nozzles or openings or the like in throttle bodies used in throttle body fuel injection systems or in direct port fuel injection systems and the like. Such freeze-ups tend to occur particularly during the occurrence of selected atmospheric conditions. It would be desirable if heat could be furnished to throttle bodies of such systems promptly after initiation of engine operation to prevent such freeze-ups.

It has been proposed in US-A-4 389 354 to construct a carburettor with a special body incorporating an electric resistance heater near the slow running fuel ports, thereby to avoid icing problems. In addition, electrically heated carburettor gaskets for aiding fuel droplets vaporisation are shown in JP-A-56-ll0550, JP-A-57-65848 and US-A-4 377 148. They have PTC resistive elements to avoid excessive temperature rise.

It is an object of this invention to provide a novel and improved fuel supply system; to provide such a system having means adapted to be compactly accommodated in the system for furnishing heat to the system for preventing freeze-up of idle speed fuel supply nozzle means or the like in the system during operation of the system; and to provide such a system which is of rugged, reliable, and economical structure.

According to a first aspect of the present invention there is provided a fuel supply system for an internal combustion engine comprising a throttle body having a passage open at one end for communicating with a corresponding opening in an intake manifold of the engine to furnish an air-fuel mixture to the engine, the throttle body having a flange disposed around the end of the passage and having a fuel inlet nozzle means at a selected location relative to the throttle body flange for furnishing fuel to said passage to form an air-fuel mixture, gasket means arranged between the throttle body flange and a mating flange disposed on the engine around the opening in the intake manifold for providing spacing between the flanges, the gasket means including thermally insulating material and having a passage for transmitting the air-fuel mixture from the throttle body passage into the intake manifold opening and being compressible for sealingly engaging the flanges around the gasket means passage, and electrical resistance heater means of a material of positive temperature coefficient of resistivity mounted in the gasket means, characterized in that the gasket means includes a relatively rigid spacer member of electrically and thermally insulating material having a chamber disposed at a location between the throttle body flange and the mating flange which is thermally separated from the gasket means passage by a portion of the thermally insulating spacer member and which has an open end facing the throttle body flange immediately adjacent the location of the nozzle means in the throttle body, the electrical resistance heater means comprises a unit of the material of positive temperature coefficient of resistivity accommodated in the chamber between the flanges to be energized therein, a metal heat-transfer member is disposed over said open chamber end to facilitate transfer of heat from said heater unit to the throttle body flange to prevent freeze-up of said nozzle means during furnishing of fuel from the nozzle means, and relatively thin sealing layers of relatively compressible electrically insulating material having respective openings aligned with the spacer member opening to form other portions of said gasket means passage are respectively secured in substantially coextensive overlying relation to the heat-transfer member at said one gasket means side and to the space-member at said opposite gasket means side.

According to a second aspect of the present invention there is provided a low profile gasket means including a heater and arranged when in use to have one side sealingly disposed against a flange on a throttle body which has fuel inlet nozzle means thereon, and to have an opposite side sealingly disposed against a mating flange on an intake manifold of an internal combustion engine, the gasket means having a passage extending between said sides to provide sealed communication between a passage in the throttle body and a corresponding intake manifold opening to permit an air-fuel mixture formed in the throttle body passage by the nozzle means to be furnished to the engine through the manifold opening, and an electrical resistance heater means of a material of positive temperature coefficient of resistivity mounted in the gasket means, characterized in that the gasket means comprises a relatively rigid spacer member of electrically and thermally insulating material having an opening forming part of said gasket means passage and having a chamber which is thermally separated from the spacer member opening by a portion of the thermally insulating spacer member and which is open at one end adjacent said one side of the gasket means to be disposed in facing relation to the throttle body flange close to the fuel inlet nozzle means, a heat-transfer layer member of electrically and thermally conducting metal having an opening aligned with the spacer member opening to form another part of the gasket means passage secured in substantially coextensive overlying relation to the spacer member at said one side of the gasket means to extend over and close the open end of the chamber, first electrically conductive terminal means attached to the heat-transfer member for connecting the heat-transfer member in an electrical circuit, second electrically conductive terminal means embedded in the spacer member to be substantially flush with the spacer member adjacent said opposite side of the gasket means extending at one end into the spacer member chamber and extending at an opposite end from an edge of the spacer member for connection in an electrical circuit, and a pair of relatively thin sealing layers of relatively compressible electrically insulating material having respective openings aligned with the spacer member opening to form other portions of said gasket means passage, the sealing layers being respectively secured in substantially coextensive overlying relation to the heat-transfer member at said one gasket means side and to the spacer member at said opposite gasket means side, and in that the heater means comprises a unit of the material of positive temperature coefficient of resistivity having one side thereof bonded in electrically and thermally conductive relation to the heat-transfer member and accommodated in the spacer member chamber, and spring means accommodated in the chamber electrically connecting an opposite side of the heater unit to the second terminal means.

In that arrangement, the heater is adapted to be energized promptly on initiation of operation of the engine to avoid freeze-up of the fuel inlet nozzle means provided in the body means as air or an air-fuel mixture is furnished to the engine through the throttle body. The gasket heater means is compact, reliable and inexpensive and is adapted to be easily and reliably accommodated between the throttle body and the engine for providing improved engine operation.

The fuel supply system and gasket heater means of this inventione are described in the following detailed description referring to the drawings in which:

Fig. 1 is a plan view of the novel and improved gasket heater means of this invention; and

Fig. 2 is a partial section view to enlarged scale along line 2-2 of Fig. 1 further illustrating assembly of the gasket heater means in the novel and improved throttle body fuel supply system of this invention.

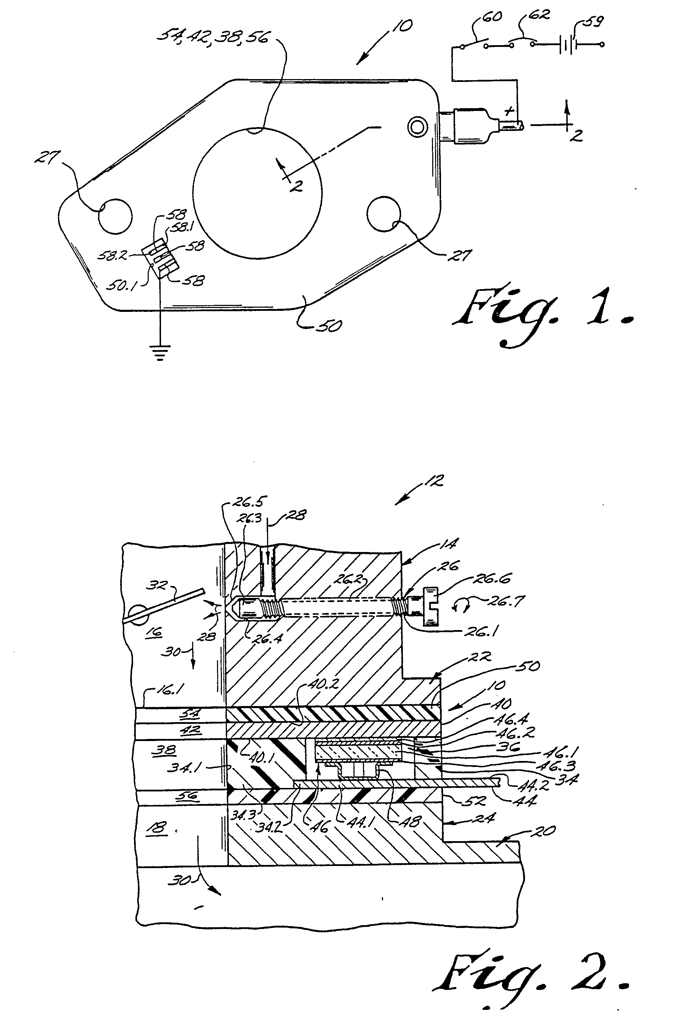

Referring to the drawings, 10 in Fig. 1 indicates the novel and improved gasket heater means of this invention which is shown in Fig. 2 to be incorporated in the throttle body of the fuel system 12 of this invention. The system 12 includes a throttle body means 14 having passage means 16 open at one end 16.1 to communicate with a corresponding opening 18 at an intake manifold of an internal combustion engine diagrammatically indicated at 20 in Fig. 2. The throttle body means has flange means 22 arranged around the open passage end 16.1 for cooperating with corresponding or mating flange means 24 on the intake manifold and the gasket heater means 10 is arranged between the noted flange means for sealing communication between the passage means 16 and the intake manifold opening. Preferably screw means (Not shown) are extended through mounting holes 27 provided in the gasket means 10 and through corresponding mounting holes (not shown) in the throttle body flange means 22 and mating flan means 24 for mounting the throttle body on the engine in a conventional manner.

Nozzle means 26 of any conventional type are provided in the throttle body means to open into the passage means 16. In a usual application of the invention, the nozzle means 26 comprises idle speed fuel supply or inlet means in a carburetion system of conventional type for furnishing fuel into the passage as is diagrammatically indicated at 28 in Fig. 2, thereby to form an air-fuel mixture in the throttle body means and to furnish that mixture to the engine as is indicated in Fig. 2 by the arrows 30 for regulating idling operation of the engine in conventional manner. However, it will be understood that such nozzle means can comprise air inlet means in a throttle body fuel injection or a direct port fuel injection system within the scope of this invention. Throttle valve means 32 are movably mounted in the passage means for regulating the flow of the air-fuel mixture to the engine in conventional manner. Typically the idle speed fuel inlet nozzle means 26 comprises a needle or valve member 26.1 threadedly engaged in the throttle body means as diagrammatically indicated at 26.2 in Fig. 2 so that a valve end 26.3 of the member is movable in a fuel entry passage 26.4 toward and away from a valve seat 26.5 formed in the fuel entry passage when head means or other valve controlled means 26.6 are rotated as is indicated by arrow 26.7. In that arrangement, movement of the valve member toward and away from the valve seat 26.5 regulates the entry of a stream of fuel 28 into the passage 16 so that the fuel rapidly evaporates in the passage to form the air-fuel mixture 30. As the nozzle means 26 is of any conventional type in accordance with this invention, it is not further described herein and it will be understood that the nozzle means comprises a fluid inlet into the passage means 16 of the type such that cooling which results from expansion of air or evaporation of fuel in the throttle body would tend to cause at least temporary or intermittent freeze-up of the nozzle means 26 resulting in occasional failure of engine firing or loss of engine driveability under at least some atmospheric conditions.

In accordance with this invention, the novel and improved gasket heater means 10 are arranged between the throttle body flange means 22 and the mating engine flange 24 so that electrical resistance heater means accommodated in the gasket means are located between portions of the throttle body flange means and the mating engine flange means at a selected location relative to the nozzle means 26 for transferring heat to the throttle body flange means for heating the throttle body and nozzle means to prevent such freeze-up of the nozzle means.

The gasket means 10 comprises a first spacer layer member 34 formed of a relatively rigid, thermally and electrically insulating phenolic material. The spacer member has a first opening which forms a chamber 36 in the spacer and has a second, typically larger opening 38 which is aligned with the passage means 16 and with the intake manifold opening 18 as shown in Fig. 2. The spacer member has a selected thickness providing the chamber 36 with a selected capacity as discussed below. A second, heat-transfer layer member 40, preferably formed of a metal material such as aluminum of relatively high thermal and electrical conductivity has a corresponding opening 42 also aligned with the passage 16. The heat-transfer member has one side 40.l which is secured in substantially coextensive, overlying relation to one side 34.l of the spacer member. The heat-transfer member extends over the chamber 36 and is preferably sealed to the spacer 34 by an adhesive (not shown) or by fusing of the spacer material or the like for sealing one end of the chamber 36. An electrically conductive metal terminal means 44 is embedded in the heater means 10 to extend into the opposite end of the chamber 36. Preferably, for example, the terminal means comprises an element of aluminum or copper which is embedded in a slot 34.2 in the spacer 34 so that one end 44.l of the terminal extends into the chamber to cover said opposite end of the chamber, so that an opposite end 44.2 of the terminal extends out from a lateral edge of the spacer 34 for electrically connecting the terminal in an electrical circuit, and so that the terminal in the slot 34.2 is substantially flush with an outer surface 34.3 of the spacer, the slot preferably accommodating the terminal therein just slightly below the surface 34.3 for avoiding interference problems in subsequent assembly steps. Preferably the terminal is secured to the spacer by adhesive means of fusing of the spacer so that the terminal 44 seals the opposite end of the chamber.

In accordance with this invention, a self-regulating electrical resistance heater means 46 is accommodated in the chamber 36 to be energized therein for transferring heat to the throttle body flange means 22 through the heat-transfer member 40. Preferably for example, the heater means comprises a heater unit having a body 46.1 of a ceramic material such as lanthanum-doped barium titanate having a positive temperature coefficient of resistivity adapted to display a sharply anomalous increase in resistance at a selective, safe temperature level for stabilizing the heater at about that temperature. Ohmic contact layer 46.2, 46.3 of metal such as aluminum are provided on opposite sides of the body 46.l and one contact layer 46.2 at one side of the body is secured in electrically and thermally conducted relation to the heat-transfer member 40 so that the heater is accommodated in the chamber 36. Preferably for example, the heater body is secured to the member 40 by use of an electrically and thermally conductive, metal-filled epoxy adhesive 46.4 as shown in Fig. 2. Electrically conductive spring means 48 such as a spider spring formed of beryllium copper are also accommodated in the chamber 36 between the opposite side of the heater body and the terminal 44 for electrically connecting the terminal to the heater.

In accordance with this invention, third and fourth gasket layer members 50 and 52 each having an opening 54, 56 therein aligned with the passage 16 are disposed on opposite outer sides of the gasket means 10 to sealingly engage the throttle body flange means 22 and the intake manifold flange 24 respectively. The third and fourth layer members are relatively thinner and of relatively more compressible electrically insulating material than the spacer 34 and are preferably secured by fusing or adhesive means at opposite sides of the gasket means 10 so that one gasket layer member 50 is disposed in substantially coextensive, overlying relation to the heat-transfer member 40 and the other gasket member 52 overlies and is coextensive with the opposite side 34.3 of the spacer without interference with the terminal 44 accommodated in the slot 34.2. Typically for example, an asbestos-filled nitrile gasket material is used but other compressible materials with or without other fillers are also used within the scope of this invention. In a preferred embodiment of the invention, the gasket layer 50 has an additional terminal opening 50.1 therein (see Fig. 1) and additional resilient terminal spring means such as a plurality of leaves 58 are secured to the side 40.2 of the heat-transfer member 40 at one end 58.1 so that opposite ends 58.2 of the springs extend through the opening 50.1 to electrically engage the throttle body or intake manifold flanges 22 and 24 thereby to connect the side 46.2 of the heater body to the throttle body flange in the noted electrical circuit as will be understood.

In that arrangement, the end 44.2 of the terminal means embedded in the spacer is adapted to be electrically connected to an automotive power source such as the battery 59 through switch means such as the ignition switch 60 diagrammatically illustrated in Fig. 1. The heater means 46 is thereby connected in an electrical circuit between the terminal 44 and the throttle body 14, as is diagrammatically indicated in Fig. 1. Accordingly the heater means is promptly energized when the switch 60 is closed for promptly generating heat and transferring that heat to the throttle body flange means 22 through the heat-transfer member 40 in an efficient manner. In that way, the throttle body means receives heat for preventing freeze-up of the nozzle means 26. The heater means is also self-regulating to stabilize at a safe temperature. The novel and improved gasket means 10 has a very low profile and is compactly accommodated between the flange means 22 and 24 and is readily connected in an electrical circuit. The heater means is safely and reliably accommodated within chamber 36 in the relatively rigid spacer 34 so it is protected during use when clamped between the flanges 22 and 24 and is preferably sealed therein for long service life. If desired, a thermostat means 62 as diagrammatically illustrated in Fig. 1 is also accommodated in a corresponding chamber in the rigid spacer 34 preferably adjacent to the nozzle means 26, to be responsive to throttle body temperature to open the noted circuit on warm days for energizing the heater means 46 only when said temperature is below a selected ambient or other temperature level.

**Claims**

1. A fuel supply system for an internal combustion engine comprising a throttle body (14) having a passage (16) open at one end for communicating with a corresponding opening (18) in an intake manifold (20) of the engine to furnish an air-fuel mixture to the engine, the throttle body (14) having a flange (22) disposed around the end of the passage (16) and having a fuel inlet nozzle means (26) at a selected location relative to the throttle body flange (22) for furnishing fuel to said passage (16) to form an air-fuel mixture, gasket means (10) arranged between the throttle body flange (22) and a mating flange (24) disposed on the engine around the opening (18) in the intake manifold (20) for providing spacing between the flanges (22, 24), the gasket means (10) including thermally insulating material and having a passage (38, 42, 54, 56) for transmitting the air-fuel mixture from the throttle body passage (16) into the intake manifold opening (18) and being compressible for sealingly engaging the flanges around the gasket means passage (38, 42, 54, 56), and electrical resistance heater means (46) of a material of positive temperature coefficient of resistivity mounted in the gasket means, characterized in that the gasket means (10) includes a relatively rigid spacer member (34) of electrically and thermally insulating material having a chamber (36) disposed at a location between the throttle body flange (22) and the mating flange (24) which is thermally separated from the gasket means passage (36, 42, 54, 56) by a portion of the thermally insulating spacer member (34) and which has an open end facing the throttle body flange (22) immediately adjacent the location of the nozzle means in the throttle body, the electrical resistance heater means (46) comprises a unit (46.1) of the material of positive temperature coefficient of resistivity accommodated in the chamber (36) between the flanges (21, 24) to be energized therein, a metal heat-transfer member (40) is disposed over said open chamber end to facilitate transfer of heat from said heater unit (46.1) to the throttle body flange (22) to prevent freeze-up of said nozzle means (26) during furnishing of fuel from the nozzle means (26), and relatively thin sealing layers (50, 52) of relatively compressible electrically insulating material having respective openings (54, 56) aligned with the spacer member opening (38) to form other portions of said gasket means passage (38, 42, 54, 56) are respectively secured in substantially coextensive overlying relation to the heat-transfer member (40) at said one gasket means side and to the spacer-member (34) at said opposite gasket means side.

2. A low profile gasket means including a heater (46) and arranged when in use to have one side sealingly disposed against a flange (22) on a throttle body (14) which has fuel inlet nozzle means (26) thereon, and to have an opposite side sealingly disposed against a mating flange (24) on an intake manifold (20) of an internal combustion engine, the gasket means having a passage (38, 42, 54, 56) extending between said sides to provide sealed communication between a passage (16) in the throttle body and a corresponding intake manifold opening (18) to permit an air-fuel mixture formed in the throttle body passage (16) by the nozzle means (26) to be furnished to the engine through the manifold opening (18), and an electrical resistance heater means (46) of a material of positive temperature coefficient of resistivity mounted in the gasket means, characterized in that the gasket means comprises a relatively rigid spacer member (34) of electrically and thermally insulating material having an opening (38) forming part of said gasket means passage (38, 42, 54, 56) and having a chamber (36) which is thermally separated from the spacer member opening (38) by a portion of the thermally insulating spacer member and which is open at one end adjacent said one side of the gasket means to be disposed in facing relation to the throttle body flange (22) close to the fuel inlet nozzle means (26), a heat-transfer layer member (40) of electrically and thermally conducting metal having an opening (54) aligned with the spacer member opening (38) to form another part of the gasket means passage (38, 42, 54, 56) secured in substantially coextensive overlying relation to the spacer member (34) at said one side of the gasket means to extend over and close the open end of the chamber (36), first electrically conductive terminal means attached to the heat-transfer member (40) for connecting the heat-transfer member in an electrical circuit, second electrically conductive terminal means (44) embedded in the spacer member to be substantially flush with the spacer member (34) adjacent said opposite side of the gasket means extending at one end into the spacer member chamber and extending at an opposite end from an edge of the spacer member for connection in an electrical circuit, and a pair of relatively thin sealing layers (50, 52) of relatively compressible electrically insulating material having respective openings (54, 56) aligned with the spacer member opening (38) to form other portions of said gasket means passage (38, 42, 54, 56), the sealing layers (50, 52) being respectively secured in substantially coextensive overlying relation to the heat-transfer member (40) at said one gasket means side and to the spacer member (34) at said opposite gasket means side, and in that the heater means (46) comprises a unit (46.1) of the material of positive temperature coefficient of resistivity having one side thereof bonded in electrically and thermally conductive relation to the heat-transfer member (40) and accommodated in the spacer member chamber (36), and spring means (48) accommodated in the chamber (36) electrically connecting an opposite side of the heater unit to the second terminal means (44).

3. A gasket means according to claim 2 characterized in that the sealing layer (50) adjacent to the heat-transfer member (40) has an additional opening therein, and said first terminal means comprises additional resilient spring means secured to a side of said heat-transfer member (40) to extend through said additional opening for resiliently electrically connecting the heat-transfer member (40) to the throttle body flange (22) for connecting the heater means (46) in an electrical circuit when in use.

4. A gasket means according to claim 2 or 3 characterized in that said spacer member (34) is formed of a relatively rigid phenolic material for shielding the heater means (46) in said chamber (36) and the heat-transfer member (40) and the second terminal means (44) are sealingly secured over respective opposite ends of the chamber (36) for sealing the heater means (46) therein.

**Patentansprüche**

1. Brennstoffzufuhrsystem für eine Brennkraftmaschine mit einem Drosselklappenkörper (14), der einen an einem Ende offenen Kanal (16) zum Herstellen einer Verbindung mit einer entsprechenden Öffnung (18) in einem Einlaßkrümmer (20) der Maschine für die Zufuhr eines Luft-Brennstoff-Gemischs zu der Maschine aufweist, wobei der Drosselklappenkörper (14) mit einem um das Ende des Kanals (16) herum angeordneten Flansch (22) sowie mit einem Einlaßdüsenmittel (26) an einer ausgewählten Stelle bezüglich des Flanschs (22) zur Lieferung von Brennstoff zu dem Kanal (16) für die Bildung eines Luft-Brennstoff-Gemischs versehen ist, einem Dichtungsmittel (10), das zwischen dem Drosselklappenkörperflansch (22) und einem dazu passenden Flansch (24) angeordnet ist und an der Maschine um die Öffnung (18) im Einlaßkrümmer (20) angebracht ist, damit ein Abstand zwischen den Flanschen (22, 24) gebildet wird, wobei das Dichtungsmittel (10) wärmeisolierendes Material enthält und mit einem Kanal (38, 42, 54, 56) zum Überführen des Luft-Brennstoff-Gemischs aus dem Kanal (16) des Drosselklappenkörpers in die Öffnung (18) des Einlaßkrümmers versehen ist und zur Erzielung eines Dichtungseingriffs an den Flanschen rund un den Kanal (38, 42, 54, 56) des Dichtungsmittels kompressibel ist, und einem elektrischen Widerstandsheizmittel (46) aus einem Material mit positivem Widerstandstemperaturkoeffizienten, das in dem Dichtungsmittel angebracht ist, dadurch gekennzeichnet, daß das Dichtungsmittel (10) ein relativ starres Abstandsglied (34) aus elektrisch und thermisch isolierendem Material mit einer Kammer (36) enthält, die an einer Stelle zwischen dem Flansch (22) des Drosselklappenkörpers und den dazu passenden Flansch (24) angeordnet ist, wobei die Kammer thermisch von dem Kanal (38, 42, 54, 56) des Dichtungsmittels durch einen Teil des thermisch isolierenden Abstandsglieds (34) getrennt ist und ein offenes Ende aufweist, das zum Flansch (22) des Drosselklappenkörpers hin unmittelbar angrenzend an den Ort des Düsenmittels im Drosselklappenkörper gerichtet ist, daß das elektrische Widerstandsheizmittel (46) eine Einheit (46.1) aus dem Material mit positivem Widerstandstemperaturkoeffizienten enthält, die in der Kammer (36) zwischen den Flanschen (22, 24) angeordnet ist, damit sie darin erregt wird, daß über dem offenen Kammerende ein aus Metall bestehendes Wärmeübertragungsglied (40) angeordnet ist, danit die Übertragung von Wärme von der Heizeinheit (46.1) zum Flansch (22) des Drosselklappenkörpers erleichtert wird und ein Einfrieren des Düsenmittels (26) während der Abgabe von Brennstoff aus den Düsenmittel (26) verhindert wird, und daß relativ dünne Dichtungsschichten (50, 52) aus relativ kompressiblem, elektrisch isolierendem Material, die jeweils Öffnungen (54, 56) aufweisen, die mit der Öffnung (38) des Abstandsglieds zur Bildung weiterer Abschnitte des Kanals (38, 42, 54, 56) des Dichtungsmittels in einer Linie liegen, jeweils im wesentlichen mit gleicher Ausdehnung übereinanderliegend bezüglich des Wärmeübertragungsglieds (40) auf einer Seite des Dichtungsmittels und bezüglich des Abstandsglieds (34) auf der anderen Seite des Dichtungsmittels befestigt sind.

2. Niederprofil-Dichtungsmittel, das ein Heizglied (46) enthält und so angeordnet ist, daß es im Gebrauch mit einer Seite abdichtend an einem Flansch (22) eines Drosselklappenkörpers (14) angeordnet ist, an dem sich Brennstoffeinlaß-Düsenmittel (26) befinden, während eine gegenüberliegende Seite abdichtend an einem dazu passenden Flansch (26) an einem Einlaßkrümmer (20) einer Brennkraftmaschine angeordnet ist, wobei das Dichtungsmittel einen Kanal (38, 42, 54, 56) aufweist, der sich zwischen den Seiten erstreckt, damit eine abgedichtete Verbindung zwischen einem Kanal (16) in dem Drosselklappenkörper und einer entsprechenden Öffnung (18) des Einlaßkrümmers entsteht, so daß ein im Kanal (16) des Drosselklappenkörpers durch das Düsenmittel (16) gebildetes Luft-Brennstoff-Gemisch der Maschine durch die Öffnung (18) des Einlaßkrümmers zugeführt wird, und mit einem elektrischen Widerstandsheizmittel (46) aus einem Material mit positivem Widerstandstemperaturkoeffizienten, das in dem Dichtungsmittel angebracht ist, dadurch gekennzeichnet, daß das Dichtungsmittel ein relativ starres Abstandsglied (34) aus elektrisch und thermisch isolierendem Material mit einer Öffnung (38) enthält, die einen Teil des Kanals (38, 42, 54, 56) des Dichtungsmittels bildet und eine Kammer (36) aufweist, die durch einen Teil des thermisch isolierenden Abstandsglieds von der Öffnung (38) in dem Abstandsglied getrennt ist und an einem Ende angrenzend an die eine Seite des Dichtungsmittels offen ist, die sich in einer Gegenüberlage zum Flansch (22) des Drosselklappenkörpers dicht bei dem Brennstoffeinlaß-Düsenmittel (26) befindet, außerdem ein eine Wärmeübertragungsschicht bildendes Glied (40) aus elektrisch und thermisch leitendem Material mit einer mit der Öffnung (38) des Abstandsglieds in einer Linie liegenden Öffnung (54) enthält, die einen weiteren Teil des Kanals (38, 42, 54, 56) des Dichtungsmittels bildet, wobei dieses Glied im wesentlichen mit gleicher Ausdehnung übereinanderliegend bezüglich des Abstandsglied (34) auf der einen Seite des Dichtungsmittels zur Erstreckung über dem offenen Ende (36) und zum Verschließen dieses offenen Endes befestigt ist, außerdem an dem Wärmeübertragungsglied (40) befestigte erste elektrisch leitende Anschlußmittel zum Verbinden des Wärmeübertragungsglieds mit einem elektrischen Stromkreis enthält, außerdem zweite elektrisch leitende Anschlußmittel (44) enthält, die so in das Abstandsglied eingebettet sind, daß sie im wesentlichen bündig mit dem Abstandsglied (34) angrenzend an die andere Seite des Dichtungsmittels verlaufen und sich an einem Ende in die Kammer des Abstandsglieds erstrecken sowie an einem entgegengesetzten Ende von einer Kante des Abstandsglieds zun Anschluß an einen elektrischen Stromkreis ausgehen, und außerdem zwei relativ dünne Dichtungsschichten (50, 52) aus relativ kompressiblem, elektrisch isolierendem Material enthält, die jeweils mit Öffnungen (54, 56) versehen sind, die mit der Öffnung (38) des Abstandsglieds in einer Linie verlaufen und weitere Abschnitte des Kanals (38, 42, 54, 56) des Dichtungsmittels bilden, wobei die Dichtungsschichten (50, 52) im wesentlichen mit gleicher Ausdehnung jeweils übereinanderliegend bezüglich des Wärmeübertragungsglieds (40) auf einer Seite des Dichtungsmittels und bezüglich des Abstandsglieds (34) auf der anderen Seite des Dichtungsmittels befestigt sind, und daß das Heizmittel (46) eine Einheit (46.1) aus dem Material mit positivem Widerstandstemperaturkoeffizienten enthält und mit einer Seite elektrisch und thermisch leitend mit dem Wärmeübertragungsglieds (40) verbunden und in der Kammer (36) des Abstandsglieds angeordnet ist, wobei in der Kammer (36) Federmittel (38) angebracht sind, die eine andere Seite der Heizeinheit elektrisch mit den zweiten Anschlußmitteln (44) verbinden.

3. Dichtungsmittel nach Anspruch 2, dadurch gekennzeichnet, daß die Dichtungsschicht (50) angrenzend an das Wärmeübertragungsglied (40) eine weitere Öffnung aufweist und daß die ersten Anschlußmittel zusätzliche elastisch federnde Mittel enthalten, die an einer Seite des Wärmeübertragungsglieds (40) so befestigt sind, daß sie sich durch die zusätzliche Öffnung erstrecken und das Wärmeübertragungsglied (40) federnd elektrisch mit dem Flansch (22) des Drosselklappenkörpers verbinden, damit das Heizmittel (46) im Gebrauch in einen elektrischen Stromkreis eingeschaltet wird.

4. Dichtungsmittel nach Anspruch 2 oder 3, dadurch gekennzeichnet, daß das Abstandsglied (34) aus einen relativ starren Phenolmaterial gebildet ist, damit das Heizmittel (46) in der Kammer (36) abgeschirmt wird und daß das Wärmeübertragungsglied (40) und die zweiten Anschlußmittel (44) abgedichtet über jeweils gegenüberliegenden Enden der Kammer (36) befestigt sind, damit das Heizmittel (46) darin abgedichtet wird.

**Revendications**

1. Système d'alimentation en carburant pour un moteur à combustion interne comprenant un carter de papillon des gaz (14) ayant un passage (16) ouvert à une extrémité de manière à communiquer avec une ouverture correspondante (18) d'un collecteur d'admission (20) du moteur afin de fournir un mélange air-carburant au moteur, le carter de papillon (14) comportant une bride (22) disposée autour de l'extrémité du passage (16) et une buse (26) d'entrée de carburant en un emplacement choisi par rapport à la bride (22) du carter de papillon de manière à fournir du carburant au passage (16) et à former un mélange air-carburant, un dispositif d'étanchéité (10) disposé entre la bride (22) du carter de papillon et une bride appariée (24) située sur le moteur autour de l'ouverture (18) du collecteur d'admission (20) de manière à créer un espace entre les brides (22, 24), ce dispositif d'étanchéité (10) comprenant un matériau thermiquement isolant, possédant un passage (38, 42, 54, 56) servant à transmettre le mélange air-carburant du passage (16) du carter du papillon à l'ouverture (18) du collecteur d'admission et étant compressible de manière à s'appliquer de façon étanche contre les brides entourant le passage (38, 42, 54, 56) du dispositif d'étanchéité, et des moyens de chauffage par résistance électrique (46), en un matériau possédant un coefficient de température positif de résistivité, montés dans le dispositif d'étanchéité, caractérisé en ce que le dispositif d'étanchéité (10) comprend un élément d'entretoise relativement rigide (34), en un matériau électriquement et thermiquement isolant, comportant une chambre (36) disposée en un emplacement situé entre la bride (22) du carter du papillon et la bride appariée (24), qui est séparée thermiquement du passage (38, 42, 54, 56) du dispositif d'étanchéité, par une partie de l'entretoise (34) thermiquement isolante et qui comporte une ouverture d'extrémité située en face de la bride (22) du carter du papillon, au voisinage immédiat de l'emplacement de la buse dans le carter du papillon, les moyens de chauffage à résistance électrique (46), comprennent une unité (46.1) en un matériau possédant un coefficient de température positif de résistivité, logée dans la chambre (36) entre les brides (21, 24) de manière à y être excitée, un organe métallique de transfert thermique (40) est disposé au-dessus de l'extrémité ouverte de la chambre de manière à faciliter le transfert de la chaleur de cette unité de chauffage (46.1) à la bride (22) du carter du papillon pour empêcher que la buse (26) ne gèle pendant qu'elle délivre du carburant, et des couches d'étanchéité relativement minces (50, 52) en un matériau électriquement isolant relativement compressible comportant des ouvertures respectives (54, 56) alignées avec les ouvertures (38) de l'entretoise de manière à former d'autres parties du passage (38, 42, 54, 56) du dispositif d'étanchéité sont fixées respectivement, en relation de recouvrement et sensiblement sur la même étendue, sur l'organe de transfert thermique (40), sur la première face du dispositif d'étanchéité, et sur l'entretoise (34) sur la face opposée du dispositif d'étanchéité.

2. Dispositif d'étanchéité à profil plat, contenant un dispositif de chauffage (46) et agencé de manière à avoir, en cours d'utilisation, une première face appliquée de manière étanche contre une bride (22) d'un carter de papillon (14), sur lequel est montée une buse (26) d'entrée de carburant, et sa face opposée appliquée de manière étanche contre une bride appariée (24) d'un collecteur d'admission (20) d'un moteur à combustion interne, le dispositif d'étanchéité comportant un passage (38, 42, 54, 56) s'étendant entre lesdites faces de manière à établir une communication étanche entre un passage (16) du carter du papillon et une ouverture correspondante (18) du collecteur d'admission et permettre la délivrance d'un mélange air-carburant formé dans le passage (16) du carter de papillon par la buse (26), au moteur par l'intermédiaire de l'ouverture (18) du collecteur, et un dispositif de chauffage à résistance électrique (46), en un matériau possédant un coefficient de température positif de résistivité, monté dans le dispositif d'étanchéité, caractérisé en ce que le dispositif d'étanchéité comprend un élément d'entretoise relativement rigide (34), en un matériau électriquement et thermiquement isolant, comportant une ouverture (38) faisant partie du passage (38, 42, 54, 56) du dispositif d'étanchéité et une chambre (36) qui est séparée, du point de vue thermique, de l'ouverture (38) de l'entretoise par une partie de cette entretoise thermiquement isolante et qui est ouverte, à une première extrémité voisine de la première face du dispositif d'étanchéité, de manière à être située en vis-à-vis par rapport à la bride (22) du carter de papillon, à proximité de la buse (26) d'entrée de carburant, un organe plat de transfert thermique (40) en un métal conducteur du point de vue électrique et thermique, ayant une ouverture (54) alignée avec l'ouverture (38) de l'entretoise de manière à constituer une autre partie du passage (38, 42, 54, 56) du dispositif d'étanchéité, fixé de manière à être en superposition, sensiblement sur la même étendue, sur l'élément-entretoise (34) sur la première face du dispositif d'étanchéité afin de s'étendre au-dessus et à proximité de l'extrémité ouverte de la chambre (36), une première borne électriquement conductrice, fixée à l'organe de transfert thermique (40) pour raccorder cet organe de transfert thermique à un circuit électrique, une seconde borne électriquement conductrice (44) noyée dans l'entretoise de manière à être sensiblement de niveau avec cette entretoise (34) au voisinage de la face opposée du dispositif d'étanchéité, s'étendant a une première extrémité, dans la chambre de l'entretoise et s'étendant à une extrémité opposée, à partir d'un bord de l'entretoise pour son raccordement à un circuit électrique, et deux couches d'étanchéité relativement minces (50, 52) en un matériau relativement compressible et isolant du point de vue électrique, comportant des ouvertures associées (54, 56) alignées avec l'ouverture (38) de l'entretoise de manière à former une autre partie du passage (38, 42, 54, 56) du dispositif d'étanchéité, les couches d'étanchéité (50 et 52) étant fixées respectivement en superposition, sensiblement sur la même étendue, sur l'organe de transfert thermique (40) sur la première face du dispositif d'étanchéité, et à l'entretoise (34) sur la face opposée du dispositif d'étanchéité, et en ce que le dispositif de chauffage (46) comprend une unité (46.1) de matériau possédant un coefficient de température positif de résistivité, dont une face est réunie, d'une manière conductrice du point de vue électrique et thermique, à l'organe de transfert thermique (40) et est logée dans la chambre (36) de l'entretoise, et des moyens élastiques (48) logés dans la chambre (36) et raccordant électriquement un côté opposé de l'unité de chauffage à la seconde borne (44).

3. Dispositif d'étanchéité selon la revendication 2, caractérisé en ce que la couche d'étanchéité (50) située au voisinage de l'organe de transfert thermique (40) comporte une ouverture additionnelle, et la première borne comprend des moyens élastiques additionnels en forme de ressort, fixés à une face de l'organe de transfert thermique (40) de manière à s'étendre à travers l'ouverture additionnelle afin de raccorder élastiquement, du point de vue électrique, l'organe de transfert thermique (40) à la bride (22) du carter de papillon pour relier le dispositif de chauffage (46) à un circuit électrique en cours d'utilisation.

4. Dispositif d'étanchéité selon la revendication 2 ou 3, caractérisé en ce que l'entretoise (34) est formée d'un matériau phénolique relativement rigide servant à protéger le dispositif de chauffage (46) placé dans la chambre (36), et l'organe de transfert thermique (40) et la seconde borne (44) sont fixés de manière étanche sur des extrémités opposées respectives de la chambre (36) de manière à enfermer de façon étanche le dispositif de chauffage (46) dans cette chambre.

Fig. 1.

Fig. 2.